# EUROPEAN PATENT SPECIFICATION

(11) **EP 2 504 075 B1**
(45) Date of publication and mention of the grant of the patent: **20.05.2015**
(21) Application number: 10788100.5
(22) Date of filing: 15.11.2010
(51) Int. Cl.: B01D 33/073, B01D 33/37, B01D 33/64, B01D 33/067

(54) **ARRANGEMENT FOR SEALING A PRESS**
ABDICHTUNG VON PRESSWALZEN
JOINT ARRANGEMENT POUR UNE PRESSE ROTATIVE

(30) Priority: 27.11.2009 SE 0950906
(43) Date of publication of application: 03.10.2012
(73) Proprietor: Andritz Oy, 00180 Helsinki (FI)
(72) Inventor: NÄSLUND, Fredrik, S-66535 Kil (SE)
(74) Representative: Simonsson, Erik
(86) International application number: PCT/FI2010/050915
(87) International publication number: WO 2011/064443

(56) References cited:
- WO-A1-2009/038529
- DE-A1- 3 837 956
- FR-A- 1 071 408
- US-A- 2 894 635
- US-A- 4 821 536

## Description

### Field of the invention

The present invention relates to a sealing arrangement for a press for dewatering a liquid suspension of a solid biological material, said press comprising a rotary dewatering drum provided with a liquid-permeable layer, and a pressing device that is arranged to press the liquid suspension against the liquid-permeable layer in such a way that liquid is pressed into the dewatering drum, whereby the sealing arrangement seals the pressing device against the dewatering drum.

### Background Art

When dewatering a liquid suspension of a solid biological material, for instance a suspension of cellulose fibers to be used for production of papermaking pulp, a press comprising a dewatering drum is often used. Generally, the dewatering drum has a filter net or a screen plate on the outside thereof, against which the pulp is compressed in a gap formed between a vat comprised in the press and the dewatering drum. Liquid that is pressed from the suspension passes through the filter net or screen plate into the drum. The liquid is then led out of the drum, while dewatered pulp is scraped off the outside of the drum and led to further treatment.

As the dewatering drum rotates while the vat is stationary, it is inevitable to arrange sealings between the drum and the stationary gables that are arranged on both sides of the vat. WO 01/12897 describes a sealing that seals a rotary dewatering drum against a stationary gable. A disadvantage of this sealing is that it is difficult to replace when it becomes worn. Document FR 1071408 is also disclosing sealings located around de hollow trunnion of the filtering drum.

### Summary of the invention

An object of the present invention is to provide a sealing arrangement for sealing a stationary gable against a rotary dewatering drum provided for dewatering a liquid suspension, which sealing arrangement is more easily serviceable than the known sealing arrangements.

This object is achieved by means of a sealing arrangement according to claim 1.

An advantage of this sealing arrangement is that the first sealing strip can be replaced without needing to detach the second sealing ring. This makes the maintenance of the sealing arrangement easier, as only minimum demounting work is required.

According to an embodiment said at least one spacer element extends through at least a part of the first sealing ring. An advantage of this embodiment is that the spacer element will act as a controller for said at least a part of the first sealing ring, so that it can be driven forward and backward in a simple and controlled way, between a mounted and a demounted position.

According to an embodiment the first sealing ring and the second sealing ring are adapted to be arranged on both sides of a draining device that comprises at least an opening formed in the circumference of the dewatering drum of said press axially outside the liquid-permeable layer for draining liquid from the dewatering drum. An advantage of this embodiment is that the sealing arrangement prevents splashes and spillage of liquid drained from the drum.

Preferably a filtrate cover extends between the first sealing ring and the second sealing ring at a radial distance from the dewatering drum, whereby a filtrate space is formed between the sealing rings, the filtrate cover and a part of the outer circumference of the dewatering drum. An advantage of this embodiment is that a very effective collecting of drained liquid can be accomplished.

According to a preferred embodiment the first sealing ring is provided with a first flange that extends in the axial direction towards the second sealing ring, whereby the second sealing ring is provided with a second flange that extends in the axial direction towards the first sealing ring, whereby the filtrate cover rests on said first and second flanges. An advantage of this embodiment is that the filtrate cover is effectively and robustly supported at a suitable distance from the dewatering drum.

According to an embodiment the first sealing ring is adapted to be located adjacent the liquid-permeable layer of said press, whereby in addition to said first sealing strip also a third sealing strip is fixed in the first sealing ring, whereby one of said first and third sealing strips is a radial sealing strip arranged to slide towards the circumference of the dewatering drum, and whereby the other of said first and third sealing strips is an axial sealing strip that is adapted to be arranged to slide towards a wear ring of said press arranged on the liquid-permeable layer. An advantage of this embodiment is that the combination of a radial sealing strip and an axial sealing strip in the first sealing ring provides a very effective sealing of the pressing device, so that the liquid suspension does not leak from the press device and get mixed with filtrate. According to a preferred embodiment pressurized fresh water can be introduced into the space defined by the radial sealing strip, the axial sealing strip, the circumference of the drum and the first sealing ring. This fresh water contributes to the lubrication and cooling of the contact surfaces between the sealing strip and the drum, and the wear ring, respectively. Besides, the fresh water washes off the material, such as fibers, that possibly is passed in between the axial sealing strip and the radial sealing strip.

According to a preferred embodiment the first sealing ring comprises a first sealing holder and a first sealing holder retainer which retain the first sealing strip between them, whereby the first sealing holder and the first sealing holder retainer are arranged to be detached from each other when the first sealing strip is being replaced. An advantage of this embodiment is that the first sealing strip is kept fixed in an efficient way in the first sealing ring, but is still easy to replace. For example, the first sealing holder retainer can be detached during such replacement, while the first sealing holder can remain mounted in place.

According to an embodiment the second sealing ring comprises a second sealing holder and a second sealing holder retainer, which retain the second sealing strip between them, whereby the second sealing holder is fixed on said at least one spacer element. An advantage of this embodiment is that the second sealing strip can be retained in an effective way while the second sealing holder sits fixed on the spacer element and does not need to be detached when the second sealing strip is replaced.

According to a preferred embodiment the second sealing holder retainer is detachable from the second sealing holder independently on said at least one spacer element. An advantage of this embodiment is that the second sealing holder retainer can easily be detached for the purpose of replacement of the second sealing strip, without needing to detach the spacer element completely or partly.

Suitably the spacer element is a bar that at its one end is fixed in the holding device and at the other end in the second sealing ring. An advantage of this embodiment is that a bar is an effective but still cheap device for fixing the second sealing ring in place. Further, one or more parts of the first sealing ring can simply be arranged to slide along the bar, for instance by arranging openings in one or more parts of the first sealing ring, so that these parts can travel along the bar upon demounting.

Further objects and characteristics of the present invention will become apparent from the description and the claims.

### Brief description of the drawings

The invention will now be described in more detail, reference being made to the accompanying drawings.
Fig. 1 is a schematic cross-sectional view and illustrates an apparatus for dewatering cellulose pulp.
Fig. 2 is a perspective cross-sectional view and illustrates a dewatering drum.
Fig. 3 is an enlargement of the area III shown in Fig. 2.
Fig. 4a is an enlarged perspective cross-sectional view and illustrates a sealing arrangement.
Fig. 4b illustrates the sealing arrangement of Fig. 4a shown in a two-dimensional cross-sectional view
Fig. 5a is an enlarged perspective cross-sectional view and illustrates the replacement of an outer radial sealing strip.
Fig. 5b is an enlarged perspective cross-sectional view and illustrates the replacement of an inner radial sealing strip.
Fig. 5c is an enlarged perspective cross-sectional view and illustrates the replacement of an axial sealing strip.

### Description of preferred embodiments

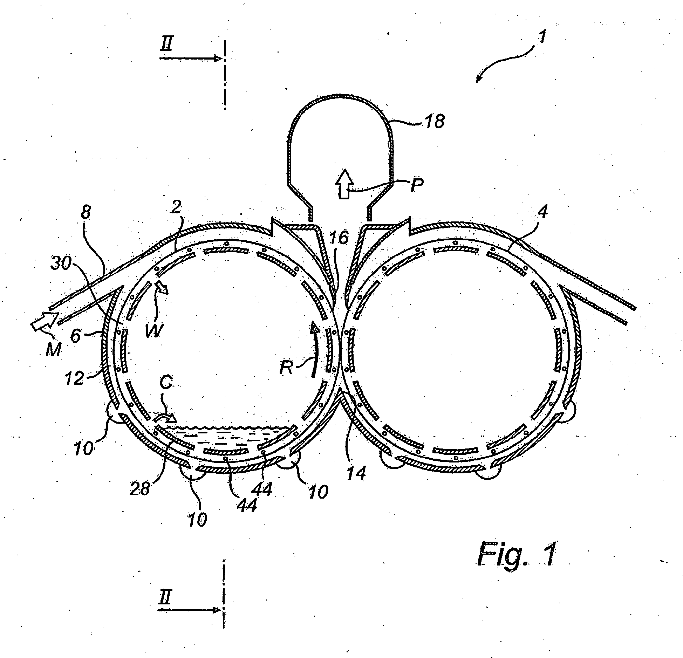

Fig. 1 illustrates, seen from the side and in cross section, a dewatering apparatus in form of a press 1, for dewatering a liquid suspension of a solid biological material, such as cellulose pulp. The press 1 has a first dewatering drum 2 and a second dewatering drum 4. The dewatering drum 2 is arranged to rotate counter-clockwise, as shown with an arrow R in Fig. 1. The dewatering drum 4 is arranged to rotate in the opposite direction, i.e. clockwise, but is, for the rest, similar in parts and function to the first dewatering drum 2, even if the second dewatering drum 4 is mirror-inverted relative to the first dewatering drum 2, and therefore the second dewatering drum 4 will not be described in more detail.

The press 1 further comprises a pressing device in form of a vat 6 inside which the first dewatering drum 2 is arranged to rotate. At its one side the vat 6 has an inlet 8 for a liquid suspension of cellulose pulp, i.e. a liquid suspension containing cellulose pulp and having a dry-solids content of typically 3-15 weight-% DR (dry solid). The vat 6 is provided with a number of liquid inlets 10, through which wash water may be supplied to the pulp.

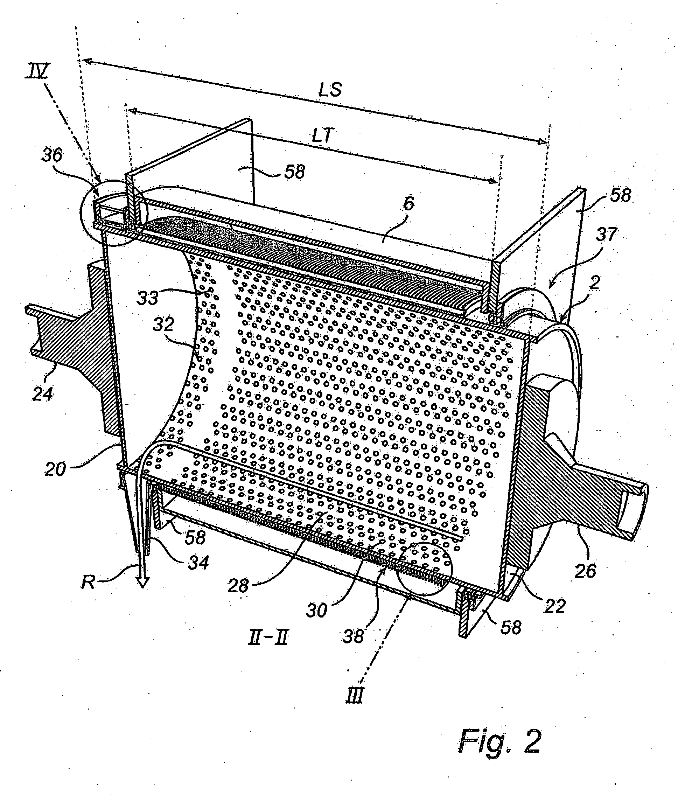

During dewatering of a liquid suspension the suspension is led to the vat 6 via the inlet 8, as shown with an arrow M, and then pressed into the gap 12 that is formed between the vat 6 and the drum 2. The liquid contained in the suspension will be pressed in through the circumference of the drum 2 and into the interior of the drum 2, as shown with an arrow W in Fig. 1. Introduced wash liquid will also be pressed into the interior of the drum 2, as shown with an arrow C. The liquid that is pressed into the drum is collected furthest down in the drum and flows out therefrom, in a way that will be described in more detail with reference to Fig. 2.

When the pulp has been sufficiently dewatered it leaves the vat 6 at the point 14 shown in Fig. 1, and is thereafter pressed against the pulp that has correspondingly been dewatered on the second dewatering drum 4. A scraper 16 is arranged to scrape off the dewatered cellulose pulp that typically has a dry solids content of 25-40 weight-% DS, from the drum 2, whereby the dewatered pulp is pressed up into a collection channel 18 and leaves the apparatus 1, as shown with an arrow P.

Fig. 2 is a cross-sectional view of the first dewatering drum 2 along the section II-II indicated in Fig. 1. The drum 2 has two gable plates 20, 22 that are arranged at each end of the drum 2 and have an axle stub 24, 26 for pivoted bearing of the drum 2 in the press 1.

The dewatering drum 2 has a support pipe 28 having the shape of a cylindrical sleeve and being connected to the two gable plates 20, 22. The support pipe 28 is provided with a number of openings 30 that are essentially evenly distributed along the support pipe 28, as shown in Fig. 1. Through these openings 30, liquid is able to pass into the interior of the drum 2 as liquid is being pressed out of the pulp by the vat 6.

The support pipe 28 has a length LS that is significantly larger than the length LT of the part of the support pipe 28 that is surrounded by the vat 6. Thus the vat 6 only surrounds the support pipe 28 along a partial length LT of the total length LS of the support pipe 28. A draining arrangement in form of a group 32 of draining openings 33 is arranged in the support pipe 28 outside the area that is surrounded by the vat 6. The group 32 of openings 33 is thus arranged in the upper part of the support pipe 28, seen in axial direction. The liquid that is pressed into the drum 2 in the part that is surrounded by the vat 6 flows in the axial direction towards this group 32 of openings 33 and leaves the drum 2 via openings 33 in the group 32 as a liquid flow R, whereby the drum 2 is drained off liquid. The liquid flow R exits the drum 2 via an outlet chute 34.

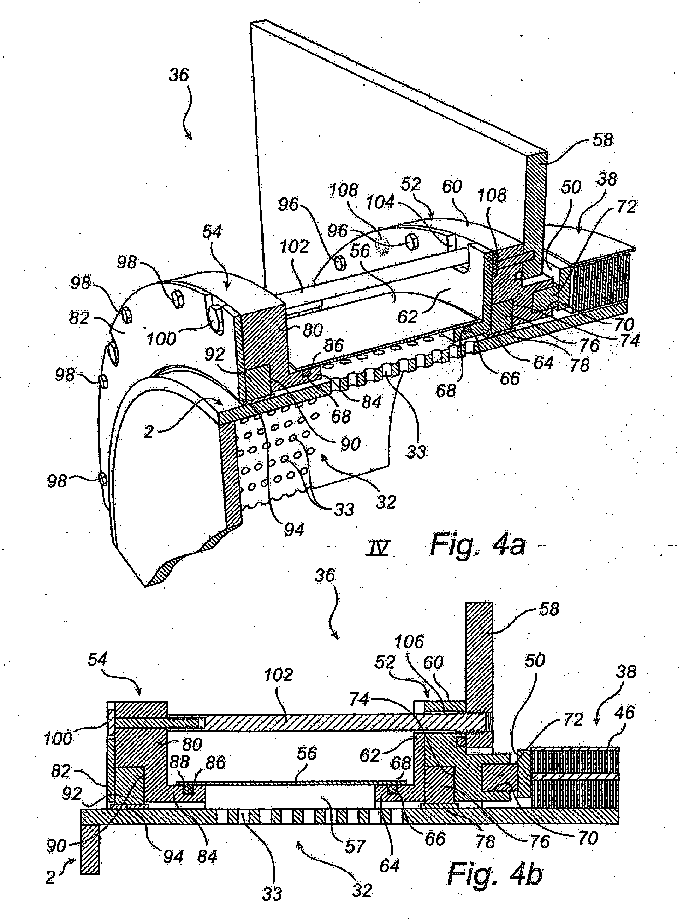

A sealing arrangement 36 is provided in connection with the group 32 of openings 33 for preventing leakage of liquid from the vat 6 into the surroundings, and also for collecting the liquid that passes out of the drum 2 through the openings 33 comprised in the group 32. The sealing arrangement 36 will be described in more detail with reference to Fig. 4a and 4b. In the opposite end of the vat 6 there is provided a sealing arrangement 37 for preventing liquid leaking from the vat 6 into the surroundings from that end of the vat 6.

Outside of the support pipe 28, in the part of the pipe 28 that is surrounded by the vat 6, there is provided a liquid transport layer 38, which is arranged for capturing from its outside dewatered pulp and for letting liquid pass through so that liquid via the openings 30 can pass into the drum 2.

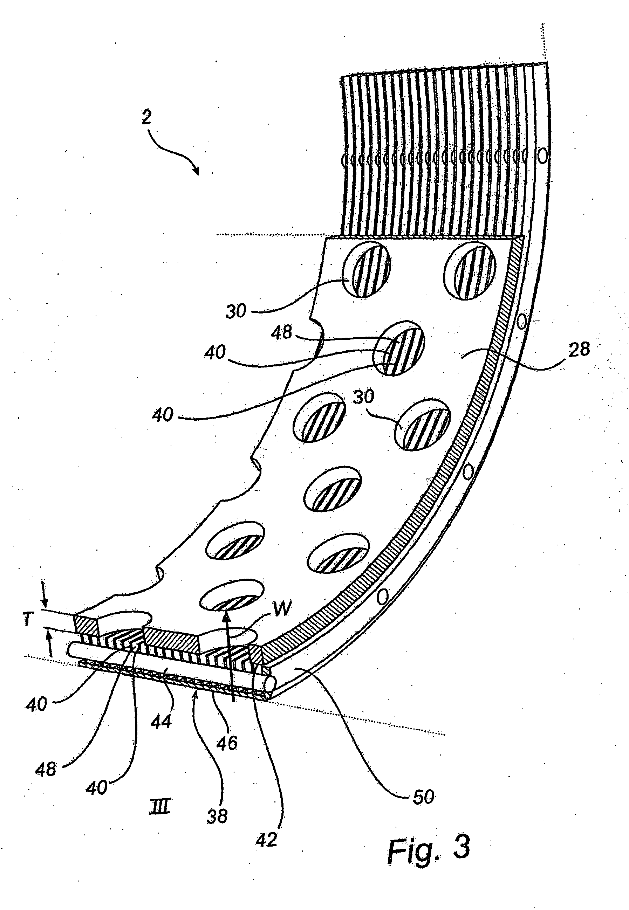

Fig. 3 shows in greater detail the area III shown in Fig. 2 for more detailed illustration of the liquid transport layer 38. Outside of the support pipe 28, which typically is made of a metal material with a material thickness T of 15-70 mm, spacer elements are provided in the form of lamellar rings 40 that are located around the circumference 42 of the support pipe 28. The lamellar rings 40 suitably have a height, measured from the circumference 42 of the support pipe 28, of approximately 20-70 mm. A number of stiffening pipes 44 extending through the lamellar rings 40 in the axial direction along the support pipe 28, as also shown in Fig. 1, keep the lamellar rings 40 spaced apart at a desired distance from each other. A liquid-permeable layer in the form of a screen plate 46 has been arranged on the outside of the lamellar rings 40. Between the lamellar rings 40, which each have a material thickness of about 3-7 mm, open channels 48 are formed which extend substantially along the periphery 42 of the support pipe 28. The width of each such channel 48 is approximately 10-30 mm. The liquid transport layer 38 has at its outer end a wear ring 50, which is made of a wear-resistant material, such as steel, for creating a sliding surface for the sealing arrangement in a way that will be described later.

When the drum 2 is being used for dewatering a liquid suspension of cellulose pulp, liquid that has been pressed out of the pulp in the gap 12 shown in Fig. 1, passes through the screen plate 46, further through the gaps 48 between the lamellar rings 40 and into the interior of the drum 2 via the openings 30 formed in the support pipe 28, as indicated by an arrow W in Fig. 3. The support pipe 28 is devoid of inner structures which tend to convey the liquid during rotation of the drum 2, and therefore the liquid flows rapidly to the bottom of the drum 2, as indicated in Fig. 1. The liquid that is collected at the lowest location in the drum 2 soon flows in the axial direction along the drum 2, as shown in Fig. 2, in the direction of the openings 33 comprised in the group 32, and leaves the drum 2 via these openings 33 comprised in the group 32, as shown with an arrow R in Fig. 2.

The sealing arrangement 36 will be described in more detail with reference to Fig. 4a and Fig. 4b.

Fig. 4a is an enlarged perspective cross-sectional view of the sealing arrangement 36 in more detail, and Fig. 4b is a two-dimensional cross-sectional view of the sealing arrangement 36.

The sealing arrangement 36 comprises a first sealing ring, in the form of an inner sealing ring 52, and a second sealing ring, in the form of an outer sealing ring 54. Between the sealing rings 52, 54 extends a filtrate cover 56 that is arranged to collect the filtrate leaving the dewatering drum 2 via the above described group 32 of openings 33. The filtrate cover 56 extends also around the circumference of the drum 2 and joins the outlet chute 34 shown in Fig. 2. A filtrate space 57 is formed, as best illustrated in Fig. 4b, between the drum 2 and the filtrate cover 56. In the filtrate space 57 the liquid that exits the openings 33 of the group 32 of openings can be led to the outlet chute 34 shown in Fig. 2.

The sealing arrangement 36 is fixed in a holding device in the form of a frame gable 58, which also supports the vat 6 shown in Fig. 1 and Fig. 2, as best illustrated in Fig. 2. As becomes obvious from Fig. 4a and 4b the inner sealing ring 52 comprises a first sealing holder in the form of an inner sealing holder 60 and a first sealing holder retainer in the form of an inner sealing holder retainer 62. The inner sealing holder retainer 62 is, as best illustrated in Fig. 4b, provided with a first flange in the form of a horizontal flange 64, upon which the filtrate cover 56 rests. A sealing strip 66 runs in a groove 68 that is formed in the side of the horizontal flange 64 facing away from the drum 2. The sealing strip 66 is arranged to seal the space between the filtrate cover 56 and the flange 64, so that liquid exiting via the openings 33 in the group 32 does not leak out.

The inner sealing holder 60 has a horizontal groove 70 that has an opening facing the wear ring 50 of the liquid transport layer 38 shown in Figure 2. A replaceable axial sealing strip 72 is arranged in the groove 70 and leans against the wear ring 50. Thus, the axial sealing strip 72 seals the sealing arrangement 36 against the liquid transport layer 38 so that neither the liquid suspension to be dewatered by being pressed against the screen plate 46 comprised in the liquid transport layer 38 nor filtrate liquid can be led from the vat 6 to the filtrate space 57.

The inner sealing holder 60 has also a radial groove 74 that has an opening facing the drum 2. A replaceable first radial sealing strip 76 is, as shown in Fig. 4b, arranged in the groove 74 in a position, seen in the axial direction, that is located between the liquid transport layer 38 and the group 32 of openings 33. The circumference of the drum 2 is provided with a wear sleeve 78 of a wear-resistant material, such as steel, against which the first radial sealing strip 76 leans. The sealing holder retainer 62 keeps the radial sealing strip 76 inside the groove 74.

According to an embodiment pressurized fresh water can be introduced to the space that is defined by the axial sealing strip 72, the radial sealing strip 76, the inner sealing holder 60 and the circumference of the drum 2, as best illustrated in Fig. 4b. This fresh water will partly seep out between the axial sealing strip 72 and the wear ring 50, as well as between the radial sealing strip 76 and the wear sleeve 78, and contribute to the lubrication and cooling of the contact surfaces between the axial sealing list 72 and wear ring 50, and the contact surface between the radial sealing list 76 and the wear sleeve 78. Besides, the fresh water rinses off the material, such as fibers, that possibly is passed in between the axial sealing strip 72 and the radial sealing strip 76.

The outer sealing ring 54 comprises a second sealing holder in the form of an outer sealing holder 80, and a second sealing holder retainer in the form of an outer sealing holder retainer 82. The outer sealing holder 80 is, as best illustrated in Fig. 4b, provided with a second flange in the form of a horizontal flange 84, upon which the filtrate cover 56 rests. A sealing strip 86 runs in a groove 88 that is formed in the side of the horizontal flange 84 facing away from the drum 2. The sealing strip 86 is arranged to seal the space between the filtrate cover 56 and the flange 84, so that liquid exiting via the openings 33 in the group 32 does not leak out.

The outer sealing holder 80 has a radial groove 90 that has an opening facing the drum 2. A replaceable second radial sealing strip 92 is arranged in the groove 90 in a position, seen in the axial direction, that is located outside the group 32 of openings 33. The circumference of the drum 2 is provided with a wear sleeve 94 of a wear-resistant material, such as steel, against which the second radial sealing strip 92 leans. The sealing holder retainer 82 keeps the second radial sealing strip 92 inside the groove 90.

The inner sealing ring 52 and the outer sealing ring 54 are fixed on the frame gable 58 in such a way that the axial sealing strip 72 and the first radial sealing strip 76 can be replaced without needing to demount the outer sealing ring 54. Further the second radial sealing strip 92 can be replaced without needing to demount the inner sealing ring 52. This is accomplished by the following way. Bolts of a first type 96 are, as best illustrated in Fig. 4a, arranged to extend through the first sealing holder retainer 62 and to fix it in the inner sealing holder 60. The bolts of the first type 96 are screwed in the sealing holder 60 and arranged to press the sealing holder retainer 62 against the inner sealing holder 60.

Bolts of a second type 98 are arranged to extend through the outer sealing holder retainer 82 and into the outer sealing holder 80. The bolts of the second type 98 are screwed in the outer sealing holder 80 and arranged to keep the outer sealing holder retainer 82 and the inner sealing holder 80 together. The bolts of the second type 98 thus keep together the outer sealing ring 54.

Bolts of a third type 100 are used together with spacer elements in the form of spacer bars, of which one spacer bar 102 is shown in Fig. 4a and 4b. The bolts of the third type 100 are arranged to, each of them, extend in a drilled end of each respective space bar 102. Each spacer bar 102 extends through a respective opening 104 in the inner sealing holder retainer 62, which opening 104 has a form of a notch arranged in the outer part of the sealing holder retainer 62, and a respective opening 106 in the inner sealing holder 60, which opening 106 has, as best illustrated in Fig. 4b, a form of a hole drilled through the sealing holder 60. Each spacer bar 102 has, at the end of the bar 102 located closest to the liquid transport layer 38, a threaded end. This threaded end is screwed in the frame gable 58 and fixes the spacer bar 102 to the frame gable 58. At its other end, i.e. the end that is located closest to the inner sealing ring 54, the spacer bar 102 rests against the outer sealing holder 80.

The bolts of the third type 100 lean against the outer sealing holder 80, extend through the outer sealing holder 80 and further into the drilled end of the solid spacer bar 102. When the third type of bolts 100 are tightened they press the outer sealing holder 80 against the spacer bar 102, which in turn is fixed on the frame gable 58. Thereby the bolts of the third type 100 fix, via the spacer bar 102, the outer sealing ring 54 against the frame gable 58. The spacer bar 102 is supported against the outer sealing holder 80 and the frame gable 58, and simultaneously maintains a constant distance between the outer sealing ring 54 and the inner sealing ring 52, because both sealing rings 52, 54 are fixed in the frame gable 58, whereby the outer sealing ring 54 is kept at a constant distance from the inner sealing ring 52 by means of the spacer bar 102.

Bolts of a fourth type 108 are used for fixing the inner sealing holder 60 at the frame gable 58. The bolts of the fourth type 108 are arranged between the inner sealing holder retainer 62 and the inner sealing holder 60 and become accessible only when the whole sealing holder retainer 62 has been demounted. According to an alternative embodiment, openings can be formed in the inner sealing holder retainer 62 opposite the bolts of the fourth type 108 so that the bolts of the fourth type 108 become accessible also when the inner sealing holder retainer 62 is mounted on the inner sealing holder 60.

The sealing strips 72, 76 and 92 can be of various types, such as homogeneous rubber strips, hose-formed and expansible strips, braided strips etc.

The sealing arrangement 37 shown in Fig. 2 can have a similar shape as the sealing arrangement 36, but mirror-inverted. Because liquid in the embodiment illustrated in Fig. 2 is only drained through the group 32 of openings 33 in one end of the dewatering drum 2, the sealing arrangement 37 can preferably be formed with only an inner sealing ring 52, i.e. without an outer sealing ring 54 and without a spacer bar 102.

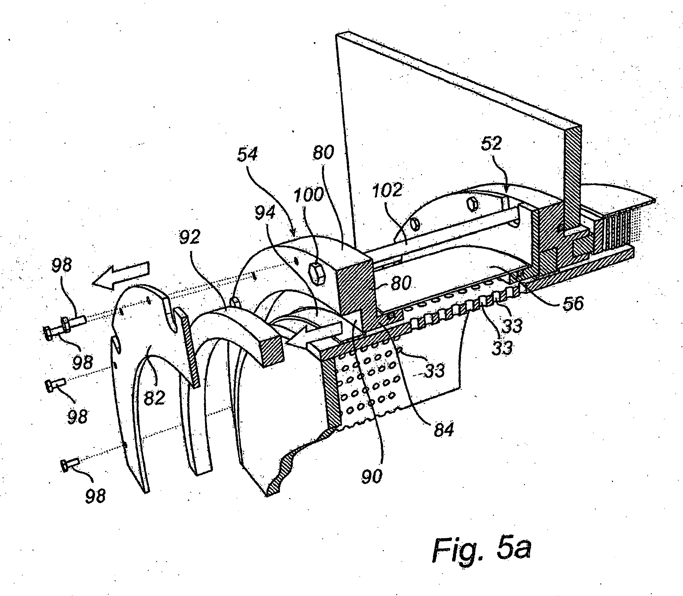

Figs. 5a-5c illustrate how the sealing strips 72, 76, 94 that are fixed in the sealing rings 52, 54 can be replaced independently of each other.

Fig. 5a illustrates how a worn or damaged second radial sealing strip 92 can be replaced. Bolts of the second type 98 are screwed off the outer sealing holder retainer 82 and the outer sealing holder 80. Hereby the outer sealing holder retainer 82 is detached and can be led aside in the left direction, as illustrated with an arrow in Fig. 5a. The radial sealing strip 92 can now be taken out of the radial groove 90 and be abandoned, or repaired. Then a new, or repaired radial sealing strip 92 is put in the groove 90. The new radial sealing strip 92 can be in the form of a continuous circular ring that surrounds the dewatering drum 2. It is, however, often preferable, for mounting purposes, that the sealing strip 92 has a division along its length so that it can more easily be threaded in the groove 90 around the dewatering drum. For instance, the new radial sealing strip 92 can be purchased in piece-goods, from which a piece of suitable length is cut and placed in the groove 90, and the ends thereof are then, e.g. bolted and/or vulcanized together so that the radial sealing strip 92 forms an unbroken circular sealing strip. It is also possible, in order to facilitate the mounting, to divide the sealing strip 92 into a number of segments along its length. When a new radial sealing strip 92 has been placed in the groove 90, the sealing holder retainer 82 is returned and mounted on the sealing holder 80 for fixing the radial sealing strip 92 in the groove 90. This way the replacement of the second radial sealing strip 92 can be accomplished without demounting the inner sealing strip 52 or the filtrate cover 56. The outer sealing holder 80 remains during the whole replacement procedure fixed on the spacer bar 102 by means of bolts of the third type 100.

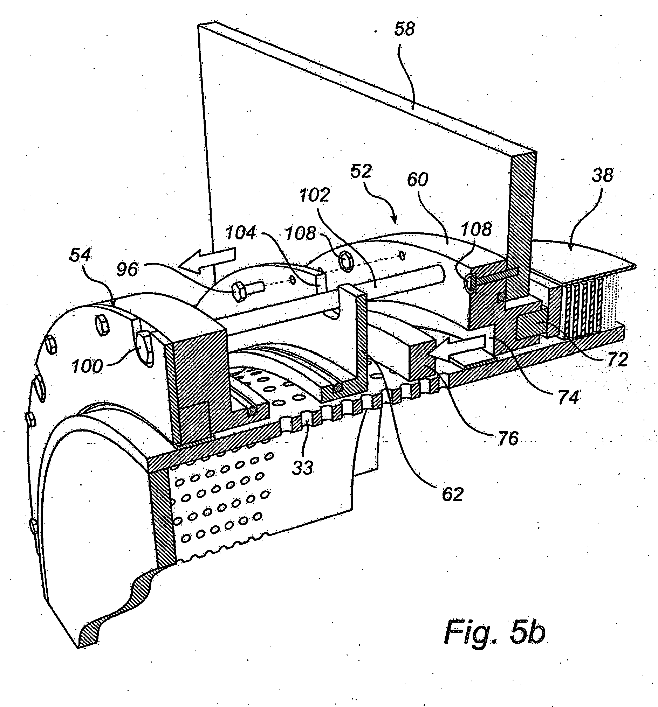

Fig. 5b illustrates how a worn or damaged first radial sealing strip 76 can be replaced. A first step includes demounting of the filtrate cover 56 shown in Fig. 4a-b. The filtrate cover 56 is suitably formed as a sheet with a division, or as a number of segments, which facilitates the demounting of the filtrate cover 56. When the filtrate cover has been demounted the bolts of the first type 96 are screwed off the inner sealing holder retainer 62 and the inner sealing holder 60. Hereby the inner sealing holder retainer 62 is released and can be led aside in the left direction, and along the spacer bar 102, as illustrated with an arrow in Fig. 5b. The radial sealing strip 76 can now be removed from the radial groove 74, as shown with an arrow in Fig. 5b, and abandoned, or repaired. Then a new, or repaired radial sealing strip 76 is put in the groove 74. The new radial sealing strip 76 can, similar to the above mentioned radial sealing strip 92, have a form of a continuous circular ring that surrounds the dewatering drum, and have a division along its lenght so that it is more easily threaded into the groove 74, or it can be divided into a number of segments along its length. When a new radial sealing strip 76 has been placed in the groove 74, the sealing holder retainer 62 is returned and mounted on the sealing holder 60 by means of bolts of the first type 96, for fixing the radial sealing strip 76 in the groove 74. Thereafter the filtrate cover 56 is mounted back in place. This way the replacement of the first radial sealing strip 76 can be accomplished without demounting the inner sealing holder 60 or the outer sealing ring 54.

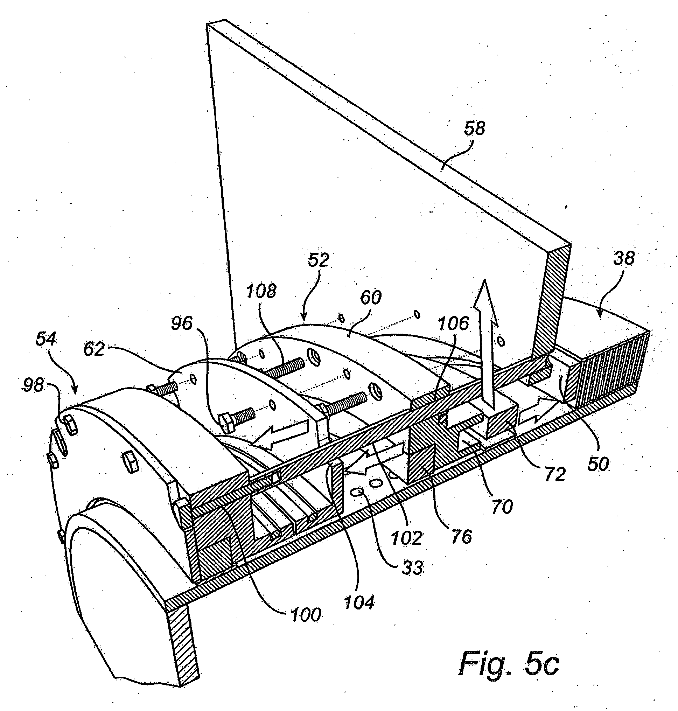

Fig. 5c illustrates how a worn or damaged axial sealing strip 72 can be replaced. A first step includes demounting of the filtrate cover 56 shown in Fig. 4a-b, as well as the inner sealing holder retainer 62 according to what has been described above with reference to Fig. 5b. Thereby the inner sealing holder retainer 62 is detached and led aside in the left direction. When the sealing holder retainer 62 is led to the left the fourth type of bolts 108 become accessible. The bolts of the fourth type 108 are loosened, whereby the inner sealing holder 60 is released from the frame gable 58. Then the inner sealing holder 60 is led to the left, as shown in Fig. 5c, and it slides along the spacer bar 102, thanks to the opening 106. The axial sealing strip 72 can now be taken out of the axial groove 70 and be abandoned, or repaired. Then a new, or repaired axial sealing strip 72 is put in the groove 70. The new axial sealing strip 72 can, similar to the above mentioned radial sealing strips 76, 92, have a form of a continuous circular ring that surrounds the dewatering drum, and have a division along its length so that it is more easily threaded into the groove 70, or it can be divided into a number of segments along its length. When a new axial sealing strip 72 has been placed in the groove 70, the sealing holder 60 is led to the right and along the spacer bar 102 towards the frame gable 58 and mounted on the frame gable 58 by means of the fourth type of bolts 108. Thereby the axial sealing strip 72 is fixed against the wear ring 50. Thereafter the sealing holder retainer 62 is led to the right towards the sealing holder 60 and mounted on the sealing holder 60 by means of the first type of bolts 96. Thereby the axial sealing strip 72 can be replaced without demounting the outer sealing ring 54. According to an alternative embodiment described above, openings can be arranged in the sealing holder retainer 62 so that the fourth type of bolts 108 become accessible also without demounting the sealing holder retainer 62. According to this embodiment the axial sealing strip 72 can be replaced without demounting the first type of bolts 96, whereby the sealing holder 60 and the sealing holder retainer 62 as a unity are led to the left when the fourth type of bolts 108 have been demounted.

It will be appreciated that many variants of the embodiments described above are conceivable within the scope defined by the appended claims.

In the above, with reference to Fig. 2 it has been described a dewatering drum having a draining arrangement in form of a group 32 of openings 33 at its one end, through which group of openings the liquid that has been pressed in can run out. It is understood that the dewatering drum can also be provided with a further draining arrangement, of the same type comprising a group of openings, at its opposite end. The latter is suitable when the drum is very long, e.g. over 4 meters, because with such long drums it can be difficult to get out all the liquid at one end of the drum. In that kind of situation, with a very long drum, a sealing arrangement 36 of the above described type is arranged at both ends of the dewatering drum, i.e. the in Fig. 2 illustrated sealing arrangement 37, will have a similar shape as the sealing arrangement 36, but mirror-inverted.

In the above, with reference to Fig. 4a and 4b it is described how the inner sealing holder retainer 62 has openings 104 in the form of grooves arranged in the outer part of the sealing holder retainer 62, as well as the inner sealing holder 60 has openings 106 in the form of holes drilled through the sealing holder 60. These opening 104, 106 make it possible for the inner sealing holder retainer 62 and the inner sealing holder 60 to be made to slide along the spacer bar 102. It is understood that the sliding can be effected in other ways. For instance, the sealing holder retainer 62 can be provided with drilled holes, through which the spacer bar 102 runs. A further possibility is that the sealing holder retainer 62 and/or the sealing holder 60 as a whole are located between the spacer bar 102 and the dewatering drum 2, whereby the sealing holder retainer 62 and/or the sealing holder 60 can simply be made to slide along and under the spacer bar 102, also without openings.

The above described sealing holder retainers 62 and 82 can be circular retainers that run around the whole drum 2. It is also possible, and sometimes preferable for both maintenance and production reasons, that one or both sealing holder retainers 62, 82 are formed of a number of segments, for example of two half circles that together surround the drum 2. Also the sealing holders 60, 80 can be formed of circular parts that run around the drum 2, or of two or more segments.

In the above a spacer element in form of cylindrical spacer bars 102 was described. It is understood that the spacer element can have different forms, such a quadratic bars, elliptic bars and also more complicated forms, which allow fixing the outer sealing ring 54 on the same holding device, such as the frame gable 58, as the inner sealing ring 52, whereby at least a part of the inner sealing ring 52 can also be made to slide along the spacer element.

It has been described in the above how the holding device, in form of the frame gable 58, is arranged adjacent the inner sealing ring 52. It is understood that a holding device instead, as an alternative, can be arranged adjacent the outer sealing ring 54, whereby the inner sealing ring 52 is fixed on such a holding device by means of spacer elements of a similar type that has been described in the above with reference to Fig. 4a-b.

The above-described press 1 is provided with a liquid inlet 10 for washing liquid. Such a press can be called a washing press. The above-described sealing arrangement can naturally be used for other types of presses as well, including such presses that are not provided with any arrangements for washing the material being dewatered. Such presses that are devoid of washing apparatuses, are sometimes called dewatering presses.

In the above it has been described how the sealing arrangement 36 is utilized when dewatering a liquid suspension comprising cellulose fibers. It is understood that the sealing arrangement 36 can also be utilized for dewatering other types of suspensions of solid biological material. Examples of such materials include various types of biomasses to be dewatered, and possibly washed, before using for production of fuel, e.g. via an ethanol production process, a biogas production process, or a fuel pellet production process, or prior to combustion of the biomass. Examples of biomasses that can be dewatered in the above described press include straw, bagass, other annual plants, grass, vegetable tops, leaves, coniferous litter, algae, moss etc. The liquid in the suspension can be water, but also other liquids, e.g. various organic or inorganic solvents can be present in the suspension to be dewatered.

## Claims

1. A sealing arrangement connectable to a press (1) for dewatering a liquid suspension of a solid biological material, said press (1) being of the type comprising a rotary dewatering drum (2) provided with a liquid-permeable layer (46), and a pressing device (6) that is arranged to press the liquid suspension against the liquid-permeable layer (46) in such a way that liquid is pressed into the dewatering drum (2),
**characterized in that** the sealing arrangement (36) comprises
a first sealing ring (52), in which a first replaceable sealing strip (76) is fixed, said first sealing strip (76) being arranged to slide against the dewatering drum (2) while it rotates, and
a second sealing ring (54) arranged at an axial distance from the first sealing ring (52), in which second sealing ring a second replaceable sealing strip (92) is fixed, which second sealing strip (92) is arranged to slide against the dewatering drum (2) as it rotates,
whereby both the first and the second sealing rings (52, 54) are fixed in a common holding device (58) in the form of a frame gable 58 which is capable of supporting the vat (6), which holding device is located at the first sealing ring (52), whereby the second sealing ring (54) is fixed in the holding device (58) by means of at least one spacer element (102), and whereby at least a part (60,62) of the first sealing ring (52) is detachable from the holding device (58) for being made to slide along said at least one spacer element (102) in order to allow replacing the first sealing strip (76).

2. Sealing arrangement according to claim 1, whereby said at least one spacer element (102) extends through at least a part (60) of the first sealing ring (52).

3. Sealing arrangement according to any one of claims 1-2, whereby the first sealing ring (52) and the second sealing ring (54) are adapted to be arranged on both sides of a draining device (32) that comprises at least an opening (33) formed in the circumference of the dewatering drum (2) of said press (1) axially outside the liquid-permeable layer (46) for draining liquid from the dewatering drum (2).

4. Sealing arrangement according to claim 3, whereby a filtrate cover (56) extends between the first sealing ring (52) and the second sealing ring (54) at a radial distance from the dewatering drum (2), whereby a filtrate space (57) is formed between the sealing rings (52, 54), the filtrate cover (56) and a part of the outer circumference of the dewatering drum (2).

5. Sealing arrangement according to claim 4, whereby the first sealing ring (52) is provided with a first flange (64) that extends in the axial direction towards the second sealing ring (54), whereby the second sealing ring (54) is provided with a second flange (84) that extends in the axial direction towards the first sealing ring (52), whereby the filtrate cover (56) rests on said first and second flanges (62, 84).

6. Sealing arrangement according to any one of the preceding claims, whereby the first sealing ring (52) is adapted to be located adjacent the liquid-permeable layer (46) of said press (1), whereby in addition to said first sealing strip (76) also a third sealing strip (72) is fixed in the first sealing ring (52), whereby one of said first and third sealing strips is a radial sealing strip (76) that is arranged to slide against the circumference of the dewatering drum (2), and whereby the other of said first and third sealing strips is an axial sealing strip (72) that is adapted to be arranged to slide towards a wear ring (50) of said press (1) arranged adjacent the liquid-permeable layer (46).

7. Sealing arrangement according to any one of the preceding claims, whereby the first sealing ring (52) comprises a first sealing holder (60) and a first sealing holder retainer (62) which retain the first sealing strip (76) between them, whereby the first sealing holder (60) and the first sealing holder retainer (62) are arranged to be detached from each other when the first sealing strip is (76) being replaced.

8. Sealing arrangement according to any one of the preceding claims, whereby the second sealing ring (54) comprises a second sealing holder (80) and a second sealing holder retainer (82) which retain the second sealing strip (92) between them, whereby the second sealing holder (80) is fixed on said at least one spacer element (102).

9. Sealing arrangement according to claim 8, whereby the second sealing holder retainer (82) is detachable from the second sealing holder (80) independently of said at least one spacer element (102).

10. Sealing arrangement according to any one of the preceding claims, whereby said spacer element is a bar (102) that at its one end is fixed in the holding device (58) and at the other end in the second sealing ring (54)

## Patentansprüche

1. Dichtanordnung, verbindbar mit einer Presse (1) zum Entwässern einer flüssigen Suspension eines festen biologischen Materials, wobei die Presse (1) von der Art ist, die eine rotierende Entwässerungstrommel (2) aufweist, welche mit einer flüssigkeitsdurchlässigen Schicht (46) versehen ist, und eine Pressvorrichtung (6), die angeordnet ist, um die flüssige Suspension so gegen die flüssigkeitsdurchlässige Schicht (46) zu drücken, dass die Flüssigkeit in die Entwässerungstrommel (2) gedrückt wird.
**dadurch gekennzeichnet, dass** die Dichtanordnung (36) aufweist:
einen ersten Dichtring (52), in dem ein erster austauschbarer Dichtstreifen (76) befestigt ist, wobei der erste Dichtstreifen (76) angeordnet ist, um gegen die Entwässerungstrommel (2) zu drücken, während sie sich dreht, und
einen zweiten Dichtring (54), der in einer axialen Entfernung von dem ersten Dichtring (52) angeordnet ist, wobei in dem zweiten Dichtring ein zweiter austauschbarer Dichtstreifen (92) befestigt ist, wobei der zweite Dichtstreifen (92) angeordnet ist, um gegen die Entwässerungstrommel (2) zu drücken, wenn sie sich dreht,
wobei sowohl der erste als auch der zweite Dichtring (52, 54) in einer gemeinsamen Haltevorrichtung (58) in Form eines am Rahmen befestigten Giebels (58), der den Bottich (6) abstützen kann, befestigt sind, wobei die Haltevorrichtung am ersten Dichtring (52) angeordnet ist, wobei der zweite Dichtring (54) in der Haltevorrichtung (58) mit Hilfe von mindestens einem Abstandshalter (102) befestigt ist und wobei mindestens ein Teil (60, 62) des ersten Dichtrings (52) von der Haltevorrichtung (58) gelöst werden kann, um entlang des mindestens einen Abstandshalters (102) zu gleiten, um den Austausch des ersten Dichtstreifens (76) zu ermöglichen.

2. Dichtanordnung nach Anspruch 1, wobei der mindestens eine Abstandshalter (102) sich durch mindestens einen Teil (60) des ersten Dichtrings (52) erstreckt.

3. Dichtanordnung nach einem der Ansprüche 1-2, wobei der erste Dichtring (52) und der zweite Dichtring (54) geeignet sind, auf beiden Seiten einer Entwässerungsvorrichtung (32), die mindestens eine Öffnung (33) aufweist, welche in dem Umfang der Entwässerungstrommel (2) der Presse (1) axial außerhalb der flüssigkeitsdurchlässigen Schicht (46) zum Entwässern der Flüssigkeit aus der Entwässerungstrommel (2) gebildet ist, angeordnet zu sein.

4. Dichtanordnung nach Anspruch 3, wobei eine Filtratabdeckung (56) sich zwischen dem ersten Dichtring (52) und dem zweiten Dichtring (54) in einem radialen Abstand von der Entwässerungstrommel (2) erstreckt, wobei ein Filtratraum (57) zwischen den Dichtringen (52, 54), der Filtratabdeckung (56) und einem Teil des äußerem Umfangs der Entwässerungstrommel (2) gebildet ist.

5. Dichtanordnung nach Anspruch 4, wobei der erste Dichtring (52) mit einem ersten Flansch (64) versehen ist, der sich in axialer Richtung zu dem ersten Dichtring (54) hin erstreckt, wobei der zweite Dichtring (54) mit einem zweiten Flansch (84) versehen ist, der sich in axialer Richtung zu dem ersten Dichtring (52) hin erstreckt, wobei die Filtratabdeckung (56) auf dem ersten und dem zweiten Flansch (62, 84) aufliegt.

6. Dichtanordnung nach einem der vorhergehenden Ansprüche, wobei der erste Dichtring (52) geeignet ist, neben der flüssigkeitsdurchlässigen Schicht (46) der Presse (1) angeordnet zu sein, wobei zusätzlich zu dem ersten Dichtstreifen (76) ebenfalls ein dritter Dichtstreifen (72) in dem ersten Dichtring (52) befestigt ist, wobei einer der ersten und dritten Dichtstreifen ein radialer Dichtstreifen (76) ist, der angeordnet ist, um gegen den Umfang der Entwässerungstrommel (2) zu drücken und wobei der andere der ersten und dritten Dichtstreifen ein axialer Dichtstreifen (72) ist, der so angeordnet ist, dass er zu einem Verschleißring (50) der Presse (1), der neben der flüssigkeitsdurchlässigen Schicht (46) angeordnet ist, hin gleitet.

7. Dichtanordnung nach einem der vorhergehenden Ansprüche, wobei der erste Dichtring (52) einen ersten Dichtungshalter (60) und eine erste Dichtungshaltervorrichtung (62) aufweist, die den ersten Dichtstreifen (76) zwischen ihnen festhalten, wobei der erste Dichtungshalter (60) und die erste Dichtungshaltervorrichtung (62) so angeordnet sind, dass sie voneinander getrennt werden, wenn der erste Dichtstreifen (76) ausgetauscht wird.

8. Dichtanordnung nach einem der vorhergehenden Ansprüche, wobei der erste Dichtring (54) einen zweiten Dichtungshalter (80) und eine zweite Dichtungshaltervorrichtung (82) aufweist, die den ersten Dichtstreifen (92) zwischen ihnen festhalten, wobei der zweite Dichtungshalter (80) auf dem mindestens einen Abstandshalter (102) befestigt ist.

9. Dichtanordnung nach Anspruch 8, wobei die zweite Dichtungshaltervorrichtung (82) von dem zweiten Dichtungshalter (80) unabhängig von dem mindestens einen Abstandshalter (102) abtrennbar ist.

10. Dichtanordnung nach einem der vorhergehenden Ansprüche, wobei der Abstandshalter ein Stab (102) ist, der an seinem einen Ende in der Haltevorrichtung (58) und am anderen Ende in dem zweiten Dichtring (54) befestigt ist.

## Revendications

1. Dispositif d'étanchéité apte à être relié à une presse (1) pour la déshydratation d'une suspension liquide d'un matériau biologique solide, ladite presse (1) étant du type comprenant un tambour de déshydratation rotatif (2) pourvu d'une couche perméable au liquide (46), et un dispositif de pressage (6) conçu pour presser la suspension liquide contre la couche perméable au liquide (46) de manière à presser du liquide dans le tambour de déshydratation (2),
**caractérisé en ce que** le dispositif d'étanchéité comprend
une première bague d'étanchéité (52) dans laquelle est fixée une première bande d'étanchéité remplaçable (76), ladite première bande d'étanchéité (76) étant conçue pour glisser contre le tambour de déshydratation (2) pendant la rotation de celui-ci, et
une deuxième bague d'étanchéité (54) disposée à une distance axiale de la première bague d'étanchéité (52), une deuxième bande d'étanchéité remplaçable (92) étant fixée dans la deuxième bague d'étanchéité (54), ladite deuxième bande d'étanchéité remplaçable (92) étant conçue pour glisser contre le tambour de déshydratation (2) pendant la rotation de celui-ci,
dans lequel les première et deuxième bagues d'étanchéité (52, 54) sont toutes deux fixées dans un dispositif de maintien (58) commun sous la forme d'un pignon de cadre 58 capable de supporter la cuve 6, ledit dispositif de maintien étant situé au niveau de la première bague d'étanchéité (52), la deuxième bague d'étanchéité (54) étant fixée dans le dispositif de maintien (58) au moyen d'au moins un élément d'espacement (102), et dans lequel au moins une partie (60, 62) de la première bague d'étanchéité (52) peut être détachée du dispositif de maintien (58) pour être amenée à glisser le long dudit au moins un élément d'espacement (102) pour permettre le remplacement de la première bande d'étanchéité (76).

2. Dispositif d'étanchéité selon la revendication 1, dans lequel ledit au moins un élément d'espacement (102) s'étend à travers au moins une partie (60) de la première bague d'étanchéité (52).

3. Dispositif d'étanchéité selon l'une quelconque des revendications 1-2, dans lequel la première bague d'étanchéité (52) et la deuxième bague d'étanchéité (54) sont adaptées pour être agencées des deux côtés d'un dispositif de drainage (32) comprenant au moins une ouverture (33) formée dans la circonférence du tambour de déshydratation (2) de ladite presse (1) axialement à l'extérieur de la couche perméable au liquide (46) pour drainer du liquide à partie du tambour de déshydratation (2).

4. Dispositif d'étanchéité selon la revendication 3, dans lequel un couvercle de filtrat (56) s'étend entre la première bague d'étanchéité (52) et la deuxième bague d'étanchéité (54), à une distance radiale du tambour de déshydratation (2), un espace à filtrat (57) étant formé entre les bagues d'étanchéité (52, 54), le couvercle de filtrat (56) et une partie de la circonférence extérieure du tambour de déshydratation (2).

5. Dispositif d'étanchéité selon la revendication 4, dans lequel la première bague d'étanchéité (52) est pourvue d'une première bride (64) s'étendant dans la direction axiale vers la deuxième bague d'étanchéité (54), la deuxième bague d'étanchéité (54) étant pourvue d'une deuxième bride (84) s'étendant dans la direction axiale vers la première bague d'étanchéité (52), le couvercle de filtrat (56) reposant sur lesdites première et deuxième brides (62, 84).

6. Dispositif d'étanchéité selon l'une quelconque des revendications précédentes, dans lequel la première bague d'étanchéité (52) est adaptée pour se trouver à côté de la couche perméable au liquide (46) de ladite presse (1), dans lequel, en plus de ladite première bande d'étanchéité remplaçable (76), une troisième bande d'étanchéité (72) est fixée également dans la première bague d'étanchéité (52), dans lequel l'une parmi lesdites première et troisième bandes d'étanchéité est une bande d'étanchéité radiale (76) arrangée de manière à glisser contre la circonférence du tambour de déshydratation (2), et dans lequel l'autre parmi lesdites première et troisième bandes d'étanchéité est une bande d'étanchéité axiale (72) adaptée pour être arrangée de manière à glisser vers une bague d'usure (50) de ladite presse (1) disposée de façon adjacente à la couche perméable au liquide (46).

7. Dispositif d'étanchéité selon l'une des revendications précédentes, dans lequel la première bague d'étanchéité (52) comprend un premier support d'étanchéité (60) et un premier moyen de retenue de support d'étanchéité (62) retenant la première bande d'étanchéité (76) entre eux, le premier support d'étanchéité (60) et le premier moyen de retenue de support d'étanchéité (62) étant conçus pour être détachés l'un de l'autre pendant le remplacement de la première bande d'étanchéité (76).

8. Dispositif d'étanchéité selon l'une quelconque des revendications précédentes, dans lequel la deuxième bague d'étanchéité (54) comprend un deuxième support d'étanchéité (80) et un deuxième moyen de retenue de support d'étanchéité (82) retenant la deuxième bande d'étanchéité remplaçable (92) entre eux, le deuxième support d'étanchéité (80) étant fixé audit au moins un élément d'espacement (102).

9. Dispositif d'étanchéité selon la revendication 8, dans lequel le deuxième moyen de retenue de support d'étanchéité (82) peut être détaché du deuxième support d'étanchéité (80) indépendamment dudit au moins un élément d'espacement (102).

10. Dispositif d'étanchéité selon l'une quelconque des revendications précédentes, dans lequel ledit élément d'espacement est une barre (102) fixée dans le dispositif de maintien (58) à l'une de ses extrémités et dans la deuxième bague d'étanchéité (54) à l'autre extrémité.
